Europäisches Patentamt

European Patent Office

Office européen des brevets

(11) Veröffentlichungsnummer: **0 332 056**
**A1**

## EUROPÄISCHE PATENTANMELDUNG

(21) Anmeldenummer: 89103688.1

(22) Anmeldetag: 02.03.89

(51) Int. Cl.⁴: **G11B 5/596**

(30) Priorität: 07.03.88 DE 3807421

(43) Veröffentlichungstag der Anmeldung:
**13.09.89 Patentblatt 89/37**

(84) Benannte Vertragsstaaten:
**DE FR GB**

(71) Anmelder: **Siemens Aktiengesellschaft**
**Wittelsbacherplatz 2**
**D-8000 München 2(DE)**

(72) Erfinder: **von Fabris, Wilhelm, Dipl.-Ing.(FH)**
**Kiem-Pauli-Weg 45**
**D-8014 Neubiberg(DE)**

(54) **Magnetplattenspeicher mit auf einer Separaten Servooberfläche gespeicherter Positionssteuerinformation.**

(57) Es soll ein Magnetplattenspeicher mit auf einer Servooberfläche gespeicherter Servoinformation geschaffen werden, bei dem diese Servoinformation - neben einer möglichst gleichmäßigen Anordnung von Positionsdibits repräsentierenden Paaren von Magnetisierungswechseln - derart aufgebaut ist, daß Degradationen geschriebener Magnetisierungswechsel keine unregelmäßigen Verzerrungen im Servolesesignal ergeben können.

Um eine hohe Linearität des aus dem Servolesesignal (SS) abgeleiteten Positionsfehlersignals (PES) zu erzielen, enthalten Servozellen der Servoinformation sechs Positionsdibits (N1 - N3, Q1 - Q3), die voneinander durch je mindestens einen Separationsmagnetisierungswechsel (SEP) getrennt sind. Für je einen Spurtyp (T1 bis T4) signifikante Paare von Positionsdibits liegen immer gleich konfiguriert bezüglich der zugehörigen Spur (n$_i$).

Das Servomuster ist insbesondere für Magnetplattenspeicher hoher Aufzeichnungsdichte und kurzer Zugriffszeit bestimmt.

FIG 6

EP 0 332 056 A1

## Magnetplattenspeicher mit auf einer separaten Servooberfläche gespeicherter Positionssteuerinformation

Die Erfindung bezieht sich auf einen Magnetplattenspeicher mit separater Servooberfläche mit in Servospuren in Form von in Umfangs- und Radialrichtung insgesamt regelmäßig angeordneten Magnetisierungswechseln gespeicherter Positionssteuerinformation gemäß dem Oberbegriff des Hauptanspruches.

Bei Magnetplattenspeichern werden häufig mehrere Magnetplatten als Plattenstapel gemeinsam auf einer Spindel fest angeordnet, die über einen Antriebsmotor in Drehbewegung versetzt wird. Jeder Datenoberfläche der Magnetplatten ist ein eigener Schreib/Lesekopf zugeordnet. Die Schreib/Leseköpfe sind in Kopfträgeranordnungen montiert, die ihrerseits gemeinsam an einer Positioniereinrichtung, sei es als Drehpositionierer oder als Linearpositionierer ausgeführt, festgelegt sind. Zweckmäßigerweise wird die Information zum gemeinsamen Positionieren der Schreib/Leseköpfe von einer eigenen Oberfläche des Plattenstapels abgeleitet, die gewöhnlich als Servooberfläche bezeichnet wird.

Auf der Servooberfläche ist die als Servoinformation bezeichnete Positionssteuerinformation gespeichert, mit der insbesondere auch die Spurteilung der Datenspuren festgelegt ist. Die Servoinformation setzt sich aus Servozellen zusammen, die sich in Umfangs- und Radialrichtung zyklisch wiederholen. Gelesen wird die Servoinformation mit einem speziellen Servokopf, der als Lesekopf ausgebildet ist und dessen Breite etwas geringer als die doppelte Spurteilung ist. Aus den so erhaltenen Lesesignalen werden neben Ablagesignalen des Servokopfes von der jeweiligen Spurmitte zur Regelung der Spurlage der Datenköpfe, auch ein Spuranfangs signal, äußere und innere Grenzen des Datenbandes durch sogenannte Guard-Bänder sowie ein Schreib/Lesetakt abgeleitet.

Ganz offensichtlich spielt daher bei steigenden Spurdichten für Magnetplattenspeicher und bei wachsenden Positioniergeschwindigkeiten auch die Art und Weise der Speicherung der Servoinformation in Verbindung mit der möglichst störungsfreien Wiedergewinnung der gespeicherten Servosignale eine große Rolle. Eine steigende Spurdichte erfordert zwangsläufig eine immer höhere Genauigkeit der Spurteilung, zumal sich ein zwischen den einzelnen Datenspuren ungenutzt verbleibender kreisringförmiger Bereich, der sogenannte Rasen, aus Gründen unerwünschten Übersprechens (Nebenlesen) nicht beliebig reduzieren läßt. Höhere Positioniergeschwindigkeiten bedingen das Bereitstellen von Ablagedaten in entsprechend kürzeren Zeitabständen, auch um die Anzahl der gekreuzten Spuren während eines Positioniervorganges fehlerfrei zu erfassen. Daraus folgt zwangsläufig, daß die Servoinformation dichter gepackt werden muß. Kürzere Abstände der Magnetisierungswechsel in der Servoinformation haben jedoch eine stärkere gegenseitige Degradation zur Folge, die sich auf die Spurteilung und die Linearität der Spurablagesignale ungünstig auswirkt.

Spurteilungsfehler beruhen auf einer Reihe von verschiedenen Einflußgrößen, die sich auch unterschiedlich auswirken. Zum besseren Verständnis der vorliegenden Erfindung seien sie im folgenden anhand der FIG 1 bis 4 der Zeichnung näher erläutert. Dabei zeigt

FIG 1 in schematischer Form ein Beispiel für ein herkömmliches, sogenanntes Quadratur-Servomuster,

FIG 2 eine herkömmliche Auswerteelektronik zur Gewinnung von Spurablagesignalen aus den Lesesignalen des Servokopfes,

FIG 3 schematisch dargestellte Signalformen von mit dieser Auswerteelektronik gewonnenen Spurablagesignalen sowie den daraus ableitbaren Spurteilungsfehler,

FIG 4 für das in FIG 1 gezeigte Servomuster durch die Anordnung und den Einschreibvorgang bedingte Einflüsse, die zu weiteren, unterschiedlichen Spurteilungsfehlern führen und

FIG 5 den prozentualen Spurteilungsfehler zwischen benachbarten Spurtypen in Abhängigkeit von dem Spurradius r.

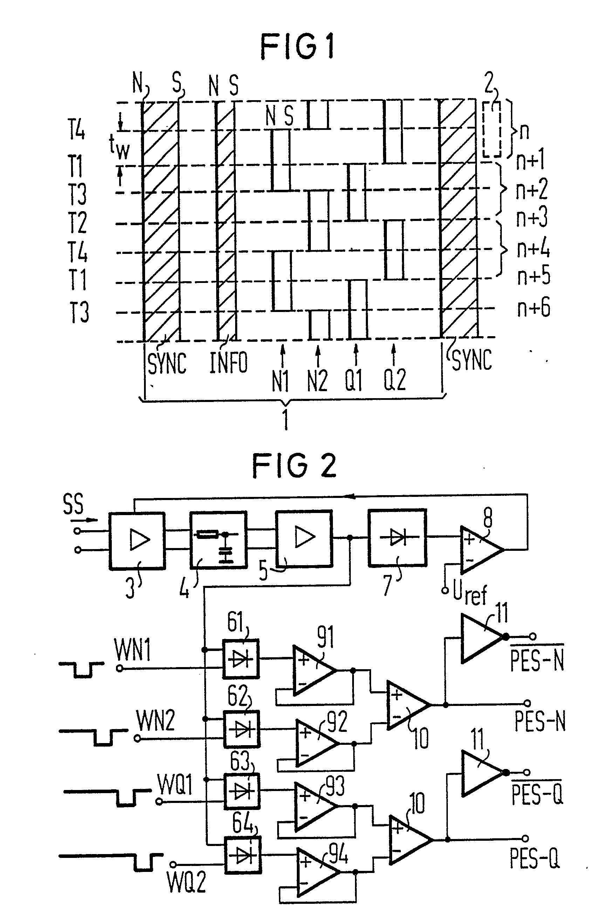

Jede Servospur wird aus einer definierten Anzahl von Servozellen 1 gebildet, die sich in Umfangsrichtung kontinuierlich wiederholen. In FIG 1 ist als Ausschnitt aus der Servooberfläche eine Servozelle für eine Reihe von radial aufeinanderfolgenden Servospuren n bis n + 6 dargestellt. In jeder Spur beginnt die Servozelle mit einem Synchronisationsdibit SYNC. Ein Dibit ist dabei gekennzeichnet durch ein Paar von aufeinanderfolgenden Magnetisierungswechseln in entgegengesetzter Richtung. In FIG 1 sind Nordflußwechsel N bzw. Südflußwechsel S durch unterschiedliche Strichstärken illustriert. Dem Synchronisationsdibit folgen ein Informationsdibit INFO sowie zwei jeweils um 90° versetzte Gruppen von Positionsdibits, nämlich die Normaldibits N1, N2 und die zugeordneten Quadraturdibits Q1, Q2.

Dabei dient das Synchronisationsdibit SYNC zur Erzeugung des Schreib/Lesetaktes des Magnetplattenspeichers und außerdem zum Generieren von Fenstersignalen für die Decodierung der Positionssignale. Das Informationsdibit wird für die Codierung des Spuranfangssignals, d. h. eines Index so wie der Guard-Bänder benutzt, die den nutzbaren Datenbereich auf den Datenoberflächen begrenzen.

Aufgezeichnet wird die Servoinformation einmalig mit einer besonderen Aufzeichnungsvorrichtung, dem sogenannten Servo trackwriter in Form von Spurmustern mit einer radialen Ausdehnung, die etwa der doppelten Spurteilung entspricht. Da jede der Servospuren $n+i$ nacheinander geschrieben wird, ergibt sich so eine überlappende Aufzeichnung von Maximalamplituden der Positionsdibits. Je nach der Phasenlage dieser Maximalamplitude innerhalb der Servozelle 1 werden so einzelne Spurtypen unterschieden. Die vier im Beispiel von FIG 1 auftretenden Spurtypen sind mit T1 bis T4 bezeichnet. In der Servospur $n$ tritt die erwähnte Maximalamplitude beim vierten Positionsdibit, dem zweiten Quadraturdibit Q2 auf. Die Spur $n$ und demzufolge in zyklischer Vertauschung wiederum die Spur $n+4$ repräsentieren also jeweils den Spurtyp T4. In der Spur $n+1$ und wiederum in der Spur $n+5$ liegt die Maximalamplitude beim ersten Positionsdibit N1, so daß diese Spuren vom Spurtyp T1 sind. Analoges gilt für die Spurtypen T2 bzw. T3. Gelesen wird die Spurservoinformation mit einem Servokopf 2, dessen Position in FIG 1 schematisch bezüglich der Spur $n$ dargestellt ist. Diese schematische Darstellung deutet an, daß die Lesebreite des Servolesekopfes 2 geringer ist als die zweifache Spurteilung und in Praxis etwa 73 % der zweifachen Spurteilung entspricht.

In FIG 2 ist, soweit für das Verständnis der vorliegenden Erfindung erforderlich, eine Auswerteschaltung für die vom Servokopf 2 beim Lesen abgegebenen Lesesignale SS dargestellt. Diese Lesesignale werden über einen Vorverstärker 3 mit automatischer Verstärkungsregelung, einen Tiefpaß 4 und einen Differenzverstärker 5 vier bezüglich ihrer Eingänge parallel geschalteten, gesteuerten Gleichrichtern 61 bis 64 zugeführt. Ein fünfter Gleichrichter 7 dient im Regelkreis zur Gleichrichtung des aufbereiteten Lesesignales. Sein Ausgang ist an den Eingang eines weiteren Differenzspannungsverstärkers 8 angeschlossen, dessen invertierendem Eingang eine Referenzspannung $U_{ref}$ zugeführt ist. Der Ausgang des Differenzspannungsverstärkers 8 ist auf den Vorverstärker 3 zur Amplitudenregelung der Lesesignale SS zurückgekoppelt.

Der Phasenlage der vier Positionsdibits N1, N2, Q1 bzw. Q2 entsprechend, werden vier Fenstersignale WN1, WN2, WQ1 bzw. WQ2 vorgesehen. Sie sind dem Steuereingang jeweils eines der Gleichrichter 61 bis 64 zugeführt und sorgen für die Ladung des jeweiligen Gleichrichters auf den aktuellen Amplitudenwert des entsprechenden Positionsdibits. Das von den gesteuerten Gleichrichtern 61 bis 64 abgegebene Ausgangssignal wird jeweils einem Spannungsfolger 91, 92, 93 bzw. 94, der als rückgekoppelter Differenzspannungsverstärker ausgebildet ist zur Impedanzwandlung zugeleitet. Diese umgeformten Ausgangssignale der gesteuerten Gleichrichter werden paarweise jeweils einem von zwei Subtrahierverstärkern 10 zugeführt. Die Differenz der Spannungswerte des den Normaldibits N1, N2 zugeordneten Gleichrichterpaares 61, 62 ergibt ein Positionssignal PES-N, analog wird aus der Differenz der Spannungswerte des anderen Gleichrichterpaares 63, 64 ein weiteres Positionssignal PES-Q gebildet. Mit zwei Invertern 11 werden diese Positionssignale PES-N und PES-Q in Positionssignale $\overline{PES\text{-}N}$ bzw. $\overline{PES\text{-}Q}$ invertiert.

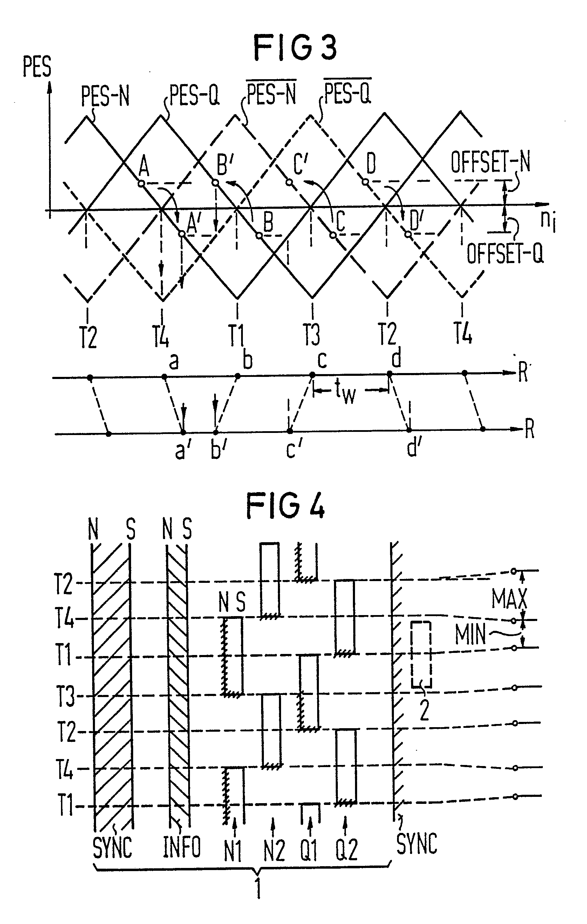

Wird der Servokopf 2 radial über die Servooberfläche bewegt, gibt die anhand von FIG 2 beschriebene Schaltungsanordnung Positionssignale PES-N, PES-Q bzw. $\overline{PES\text{-}N}$ und $\overline{PES\text{-}Q}$ ab, deren Spannungsverläufe idealisiert in FIG 3 dargestellt sind. Bei der gewählten schematisierten Darstellung der Kurvenverläufe sind Einflüsse der radialen Relativbewegung des Servolesekopfes gegenüber dem Speichermedium nicht erfaßt. Schnittpunkte der Kurvenverläufe mit einer Referenzlinie, die mit $n_i$ bezeichnet ist, markieren die jeweiligen Mitten der Servospuren. Der Kurvenverlauf beiderseits dieser Spurmitten wird zur Spurfolgeregelung genutzt. Das bedeutet, es wird der Servokopf 2 solange radial verschoben, bis sich am Ausgang des jeweiligen Subtrahierverstärkers 10 für das ausgewählte Positionssignal eine Spannungsdifferenz von 0 V ergibt.

Betrachtet man nochmals FIG 1, so wird deutlich, daß beim Spurtyp T1 die Quadratur-Dibits Q1, Q2 und beim Spurtyp T4 die Normaldibits N1, N2 jeweils die signifikanten Positionsdibits darstellen, um den Servokopf 2 auf die jeweilige Spurmittel einregeln zu können. Für den Spurtyp T4 bildet somit das normale Positionssignal PES-N bzw. für den Spurtyp T1 das um 90° phasenverschobene Positionssignal PES-Q das Spurfolgeregelsignal. Beide Signalverläufe haben im Bereich ihres Schnittpunktes mit der Referenzlinie $n_i$ negative Steigung. Für den Spurtyp T2 sind wiederum die Quadraturdibits Q1, Q2, für den Spurtyp T3 die normalen Positionsdibits N1, N2 zu selektieren. Die Kurvenverläufe der Positionssignale PES-Q bzw. PES-N weisen aber im Bereich der entsprechenden Schnittpunkte mit der Referenzlinie $n_i$ positive Steigungen auf. Um ein stabiles Regelsystem für die Spurfolge zu erhalten, müssen deshalb die Positionssignale PES-N und PES-Q bei den Spurtypen T3 bzw. T2 mit Hilfe der Inverter 11 invertiert werden.

Mit dieser vorstehenden Beschreibung eines Beispiels für eine konventionelle Spurfolgeregelung sind die Voraussetzungen geschaffen, die verschiedenen Einflußgrößen auf die Spurteilung systematisch analysieren zu können.

Vorstehend wurde das Verfahren zum Einschreiben der Servoinformation kurz angedeutet. Die radiale Positionsbestimmung des Schreibkopfes bezüglich der Servooberfläche wird hier auf optischem Wege mit Hilfe eines Lasers durchgeführt. Beim Servotrackwriter ist der Spurabstand der Servoinformation durch die Anzahl der Laserschritte pro Servospur in Abhängigkeit von der Radialverschiebung des jeweiligen Positioniersystemes, d. h. in Abhängigkeit vom Drehwinkel im Falle eines Drehpositionierers bestimmt. Gerade bei Drehpositionierern muß im Bedarfsfall die Schrittanzahl um einen Laserschritt auf- bzw. abgerundet werden, um den gewünschten Drehwinkel wenigstens näherungsweise einzustellen. Dabei ergibt sich ein Spurteilungsfehler von maximal einer halben Schrittweite. Bei einer Spurdichte von beispielsweise 1200 TPI (Spuren pro Inch) und einem gegebenen Schwenkradius des Servokopfes resultiert daraus ein Spurteilungsfehler von 18 nm, was einem relativen Spurteilungsfehler von 0,85 %o entspricht. Wie ersichtlich, ist dieser Spurteilungsfehler systematisch bedingt und nicht vollständig eliminierbar.

Eine weitere, ebenfalls nur in Grenzen beherrschbare Einflußgröße ist der nicht wiederholbare Spindelschlag, der insbesondere auf Toleranzen in den Spindellagern beruht. Ein dadurch bedingtes radiales Auswandern der Servooberfläche während der Schreibphase für einen Spurtyp der Servoinformation resultiert in einer Abweichung der geschriebenen Spur von der Nennspurteilung in dem entsprechenden Sektorbereich. Wiederum für eine Spurdichte von 1200 TPI wird bei heute bekannten Magnetplattenspeichern ein nicht wiederholbarer Spindelschlag von bis zu ± 0,15 μm noch als zulässig erachtet. Der daraus resultierende relative Spurteilungsfehler beträgt dann bis zu ± 0,7 %. Die Auswirkung des festgeschriebenen nicht wiederholbaren Spindelschlages auf den Abstand der Datenspuren hängt von seiner Frequenz oder präziser von der Fähigkeit des Spurfolgeregelsystemes ab, solchen eingeschriebenen Abweichungen von der Nennspurteilung zu folgen.

Die vorstehend erläuterten Ursachen für einen möglichen Spurteilungsfehler sind im Rahmen der vorliegenden Erfindung von untergeordneter Bedeutung, denn die Erfindung bezieht sich unmittelbar weder auf eine Reduzierung der Auswirkungen eines nicht wiederholbaren Spindelschlages noch auf eine Verbesserung eines Verfahrens oder einer Vorrichtung zum Einschreiben der Servoinformation auf die Servooberfläche. Die genannten Fehlerursachen sind hier aus Gründen des allgemeinen Verständnisses und der Vollständigkeit aufgeführt. Die folgenden Ursachen für mögliche Spurteilungsfehler dagegen beziehen sich unmittelbar auf die Problematik, die der vorliegenden Erfindung zugrundeliegt. Eine dieser weiteren Ursachen für einen Spurteilungsfehler ist in der durch Toleranzen bedingten Fehlfunktion der anhand von FIG 2 beschriebenen Auswerteelektronik zu suchen.

Jedem der Subtrahierverstärker 10 ist ein Paar von gesteuerten Gleichrichtern 61, 62 bzw. 63, 64 zugeordnet, die unterschiedliche Lade- bzw. Entladezeitkonstanten aufweisen können. Weiterhin treten in jedem der Spannungsfolger 91 bis 94 unterschiedliche Offsetspannungen ebenso auf wie bei den Subtrahierverstärkern 10. Dazu kommt eine unterschiedliche Gleichtaktunterdrückung der Subtrahierverstärker 10 aufgrund von Widerstandstoleranzen der Beschaltungswiderstände. All diese Ursachen resultieren in einem Offsetbetrag an den beiden Subtrahierverstärkern 10, der eine Korrekturbewegung des Servokopfes 2 während des Spurfolgebetriebes zur Folge hat.

Im allgemeinen Fall können sich natürlich unterschiedliche Paarungen bei diesem Offsetfehler für beide Subtrahierverstärker 10 ergeben. Zur Erläuterung der Auswirkungen ist beispielhaft hier der Fall eines positiven Offsetfehlers bei dem einen der Subtrahierverstärker 10 angenommen, der das normale Positionssignal PES-N abgibt. Dagegen ist ein negativer Offsetfehler bei dem zweiten Subtrahierverstärker angenommen, der das Quadratur-Positionssignal PES-Q erzeugt. Vereinfachend wird weiter angenommen, daß beide Offsetfehler den gleichen Betrag aufweisen.

Dieser Sachverhalt ist in FIG 3 angedeutet. Wären die Positionssignale, wie zunächst erläutert, nicht mit einem Offsetfehler behaftet, so kennzeichnete der Schnittpunkt jeder der Kurvenverläufe in idealer Weise tatsächlich eine Spurmitte, d. h. einen der Orte a, b, c bzw. d als Spurpunkte auf einem Radialstrahl R der Servooberfläche. Jeder dieser Spurpunkte hat den identischen Abstand zu seinen Nachbarn, wobei dieser Abstand der theoretischen Spurteilung tw exakt entspricht.

Unter Berücksichtigung der oben angenommenen Offsetfehler ergibt sich in der Praxis dagegen folgender Sachverhalt: Das normale Positionssignal PES-N ist mit einem positiven Offsetfehler OFFSET-N behaftet, d. h. wenn der Servokopf 2 bei einem abgetasteten Spurtyp T4 exakt über der Spurmitte steht, ist das Positionssignal um den Betrag des Offsetfehlers immer noch positiv. Das Spurfolgesystem interpretiert dies als einen Spurablagepunkt A entsprechend seiner Regelkennlinie und verschiebt den Servokopf 2 in Richtung der Nachbarspur solange bis die Offsetspannung ausgeregelt ist. Beim idealen Positionssignal entspreche dies jedoch bereits einem Punkt A' auf der Kennlinie. Grafisch ergibt sich damit ein tatsächlicher Spurpunkt a' auf dem nochmals parallel gezeichneten Radialstrahl R. Grafisch kennzeichnet damit der Abstand des idealen Spurpunktes a vom tatsächlichen Spurpunkt a′ die aufgrund des Offsetfehlers eingetretene Spurablage des Servokopfes 2 für den Spurtyp T4.

Das Quadratur-Positionssignal PES-Q, das für den Spurtyp T1 signifikant ist, soll in dem gewählten Beispiel einen negativen Offsetfehler aufweisen. Damit ist es bereits um den Betrag des Offsetfehlers OFFSET-Q negativ, wenn tatsächlich erst die Spurmitte erreicht ist. Auf der Kennlinie ist dieser Punkt mit B bezeichnet. Da das Spurfolgesystem diesen Fehler ausregelt, wird der Servolesekopf 2 auf einen tatsächlichen Spurpunkt b′ gesetzt, der beim idealen Positionssignal dem Kennlinienpunkt B′ entspricht. Ähnliches gilt für die Spurverfolgung bei den Spurtypen T3 und T2 unter Berücksichtigung der Tatsache, daß die entsprechenden Positionssignale invertiert sind. Entsprechend den Verschiebungen auf den Kennlinien von den Orten C nach C′ und D nach D′ ergeben sich analog die tatsächlichen Spurpunkte c′ bzw. d′. Damit ist erkennbar, daß die aufgrund von Offsetfehlern tatsächlich auftretenden Spurabweichungen nicht immer in der gleichen Richtung verlaufen. Die minimale Spurteilung ergibt sich in dem betrachteten Beispiel zwischen den Spurtypen T4 und T1, eine maximale Spurteilung zwischen den Spurtypen T3 und T2. Besonders kritisch wird die Auswirkung des Offsetfehlers deshalb, weil er sich nicht immer in der gleichen Richtung auswirken muß. Da diese Fehlerursache anhand von FIG 3 nur qualitativ illustriert ist, sei hinzugefügt, daß im praktischen Fall bei 1200 TPI aufgrund der Toleranzen einer Auswerteelektronik entsprechend der Darstellung von FIG 2 Spurteilungsfehler in der Größenordnung von 6 bis 7 % möglich sind.

Schließlich ist eine weitere Ursache für einen Spurteilungsfehler in dem Servomuster selbst zu suchen. Dies sei qualitativ anhand von FIG 4 illustriert. FIG 4 zeigt im wesentlichen nochmals einen Ausschnitt aus einer Servooberfläche, wie er bereits in FIG 1 dargestellt ist. Die hier betrachtete Ursache für Spurteilungsfehler beruht auf Degradationseffekten, die beim Einschreiben der Servoinformation auftreten. Wird beispielsweise mit einem Servoschreibkopf 2 beim Einschreiben der Servoinformation ein Servomuster vom Spurtyp T1 in FIG 4 geschrieben, so bedeutet dies, daß der Ort des normalen Positionsdibits N1 durch zwei Magnetisierungswechsel definiert ist. In unmittelbarer Nachbarschaft werden die Magnetisierungswechsel für das Informationsdibit INFO geschrieben. Der Süd-Magnetisierungswechsel S beim Informationsdibit INFO beeinflußt wegen des geringen Abstandes vor allem den Nord-Magnetisierungswechsel des normalen Positionsdibits N1. Diese stärkere Degradation des Nord-Magnetisierungswechsels N ist in FIG 4 durch eine Schraffur angedeutet.

In ähnlicher Form werden Nord-Magnetisierungswechsel des einen Quadratur-Dibits Q1 durch Süd-Magnetisierungswechsel von benachbart geschriebenen Süd-Magnetisierungswechseln des zweiten normalen Positionsdibits N2 beeinfluß, wie in FIG 4 durch entsprechende Schraffur angedeutet ist.

Ein zweiter Degradationseffekt ist dadurch bedingt, daß die einzelnen Spuren nacheinander geschrieben werden. Hierbei erfolgt eine stärkere Degradation einseitig am Rande bei einem mit entgegengesetzter Polarität überschriebenen Magnetisierungswechsel gegenüber einem geschriebenen Magnetisierungswechsel. In der FIG 4 sind alle unten liegenden Kanten der Positionsdibits einseitig davon betroffen, wie ebenfalls durch eine Schraffur angedeutet ist.

Vom Schreibvorgang aus betrachtet, werden stärkere Degradationen, sofern sie auftreten, immer in gleicher Richtung bewirkt und doch führt dies bei der Auswertung des konventionellen Servomusters zu Spurteilungsfehlern in unterschiedlicher Richtung. So führt beim Spurtyp T4 die degradierte geschriebene Seite des ersten normalen Positionsdibits N1, die mit der überschriebenen Seite des zweiten normalen Positionsdibits N2 bei der Bewertung der Lesesignale verglichen wird, zu einer Verschiebung der Spurmitte in Richtung auf den Spurtyp 1, da das erste Positionsdibit N1 stärker degradiert ist. Bei dem Spurtyp T1 dagegen bewirkt die überschriebene Seite des zweiten Quadratur-Dibits Q2 gegenüber der geschriebenen Seite des ersten Quadratur-Dibits Q1 eine Verschiebung der Spurmitte in Richtung des Spurtyps T4, denn das erste Quadratur-Dibit Q1 weist keine stärkere Degradation auf. In ähnlicher Form treten Spurmittenverschiebungen bei den Spurtypen T2 und T3 auf. Wie in FIG 4 rechtsbündig angedeutet ist, werden die Spurmitten bei den Spurtypen T3 und T2 in die gleiche Richtung wie beim Spurtyp T1 verschoben, d. h. zwischen den Spurtypen T1 und T3 bzw. T3 und T2 tritt jeweils der geringste Spurteilungsfehler in Erscheinung. Die minimale Spurteilung MIN tritt zwischen Spuren vom Spurtyp T4 und T1 auf, der größte Spurabstand MAX dagegen zwischen Spuren vom Spurtyp T2 und T4.

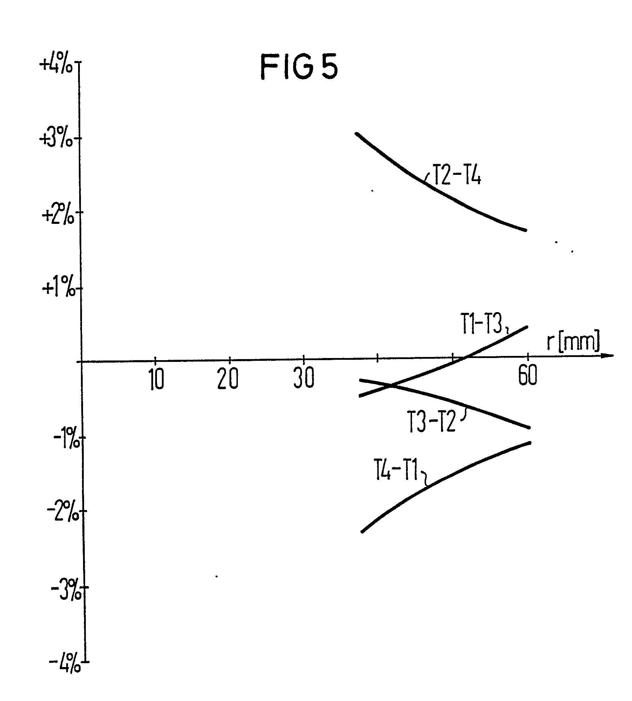

Die beiden beschriebenen Degradationseffekte werden einerseits vom Flußwechselabstand des Servomusters und andererseits von der Spaltgeometrie des schreibenden Servokopfes bestimmt. Während der Flußwechselabstand des Servomusters mit kleiner werdendem Spurradius abnimmt, ist der Überschreibeffekt von der vom Spurradius bedingten Flughöhe und von der jeweiligen Spaltgeometrie des schreibenden Servokopfes abhängig. Dementsprechend ändert sich der Spurteilungsfehler in Abhängigkeit vom Spurradius r. FIG 5 zeigt für eine gegebene maximale Flußwechseldichte des Servomusters auf dem kleinsten Spurradius und einem gegebenen Servoschreibkopf die Abhängigkeit des Spurteilungsfehlers vom Spurradius. Höhere Flußwechseldichten verstärken diesen Fehler.

Beim Magnetplattenspeicher wird bekanntlich in der Mitte zwischen aufeinanderfolgenden Datenspuren ein nicht überschriebener Bereich, der sogenannte Rasen definiert, um Degradationen der geschriebenen Daten in benachbarten Spuren, aber auch Überkopplungen beim Lesevorgang herabzusetzen. Der beschriebene Einfluß des Spurmusters verursacht bei einer angenommenen Spurdichte von 1200 TPI eine Verringerung dieses Rasens zwischen den Spurtypen T4 und T1 um etwa 8 %. Darüber hinaus wirkt sich die unterschiedliche Degradation der Positionsdibits nachteilig auf die Linearität der Positionssignale aus, wie man sich aufgrund der vorstehenden Erläuterungen von FIG 3 im einzelnen ohne weiteres vorstellen kann.

Im Gegensatz zu den eingangs erwähnten Fehlerursachen, die weitgehend systematisch bedingt und deshalb nicht vollständig eliminierbar sind, sind die zuletzt genannten Fehlerursachen von wesentlich erheblicherem Einfluß. Die ungünstigste Kombination der Einflüsse des Offsetfehlers und des Spurmusterfehlers ist dann gegeben, wenn sich die Polarität der maximal zulässigen Offsetwerte der beiden Subtrahierverstärker 10 so auswirkt, daß sich dieser Einfluß zum Spurmusterfehler addiert, d. h. sich aufgrund des Offsetfehlers ebenfalls der kleinste Spurabstand zwischen den Spurtypen T4 und T1 einstellt. Bei einer derartigen Addition der verschiedenen Ursachen für einen Spurteilungsfehler kann sich dieser kombinierte Einfluß zu einem Fehler von etwa 10 % addieren. Daraus resultiert eine im Abstand von vier Datenspuren sich kontinuierlich wiederholende Verringerung der Breite des Rasens bis zu 50 % bei der beispielsweise gewählten Spurdichte von 1200 TPI. Bei höheren Spurdichten vergrößert sich dieser prozentuale Fehleranteil noch mehr.

Einen Teil dieser aufgezeigten Fehlerursachen hat man bereits früher erkannt. In US-A-4,602,304 ist insbesondere auf die Fehlerursache, die sich aus der Geometrie des Aufbaus einer Servozelle ergibt, eingegangen. Hier ist bereits aufgezeigt, daß diese Fehlerursache umsomehr ins Gewicht fällt, wenn die Spurdichte für die magnetische Aufzeichnung bei gleichzeitig verkürzten Positionierzeiten immer mehr erhöht wird. Eine wesentliche Schwierigkeit wird danach darin gesehen, daß in einer Servozelle unterschiedliche Information, wie z. B. Synchronisierungsinformation, Sektorinformation und Indexinformation neben der zur Spurfolgeregelung herangezogenen Positionsinformation niedergelegt ist. Danach ist es erwünscht, insbesondere periodisch auftretende Amplitudenveränderungen des Lesesignals des Servokopfes, die auf die neben der Positionsinformation in der Servozelle enthaltene sonstige Information zurückzuführen ist, möglichst auszuschalten.

Grundsätzlich betrachtet, wird danach angestrebt, das Servomuster in einer Servozelle möglichst gleichmäßig auszugestalten, um ungleich lange Abstände zwischen Magnetisierungsmustern zu vermeiden, da diese - wie oben ausgeführt -zu unterschiedlichen Degradationserscheinungen führen und die Lesesignale verfälschen. Auch hier sollen in einer Servozelle in vier aufeinanderfolgenden Spuren vier verschiedene Spurtypen niedergelegt sein und diese vier Spurtypen mit zwei Normal-Positionsdibits und zwei Quadratur-Positionsdibits selektiert werden. Unter dieser Voraussetzung wird ein Servomuster angegeben, bei dem die Paare von Magnetisierungswechseln in regelmäßigen Abständen und einer radialen Länge von zwei Spurteilungen jeweils um eine Spurteilung überlappend angeordnet sind, so daß sich ein gleichmäßig treppenförmig ansteigendes Muster von Paaren von Magnetisierungswechseln ergibt. Jeweils vier, in Spurrichtung aufeinanderfolgende Magnetisierungswechselpaare bilden dabei eine Subzelle. Sechs derartiger Subzellen bilden zusammen mit der übrigen Information eine Servozelle.

Auf den ersten Blick ist dieses bekannte Servomuster in seiner Gleichförmigkeit sehr bestechend. Bei einer genaueren Analyse der Servomuster für die einzelnen Spurtypen erkennt man auch, daß bei einem alternativen Wechsel von Normal-Positionsdibit N1 bzw. N2 und Quadratur-Dibit Q1 bzw. Q2 innerhalb einer Subzelle die jeweils für den Spurtyp signifikanten Positionsdibits gleichen Abstände aufweisen. Allerdings ist die Lage des jeweils signifikanten Paares von Positionsdibits bezüglich der Spurmitte bei den einzelnen Spurtypen unterschiedlich. Einseitige Degradation überschriebener Positionsdibits wirkt sich daher bei den einzelnen Spurtypen, wie einleitend näher erläutert, auch hier als eine Ursache für einen weiterhin vorhandenen Spurteilungsfehler aus. Darüber hinaus ist auch bei dieser bekannten Lösung immer noch der Fall gegeben, daß das beispielsweise in einer der beschriebenen Schaltungsanordnung ähnlichen Auswerteelektronik generierte Positionssignal für die einzelnen Spurtypen im auszuwertenden Regelbereich unterschiedliche Steigungen aufweist und sich damit die Verstärkung des Spurfolgeregelkreises im Spurfolgebetrieb ändert.

Der vorliegenden Erfindung liegt daher die Aufgabe zugrunde, einen Magnetplattenspeicher mit separater Oberfläche gemäß dem Oberbegriff des Hauptanspruches zu schaffen, bei dem die in Servozellen gespeicherte Positionssteuerinformation - neben einer gleichmäßigen Anordnung der die Positionsdibits repräsentierenden Paare von Magnetisierungswechseln - derart aufgebaut ist, daß sich beim Beschreiben der Servooberfläche unvermeidbar ergebende Degradationen der geschriebenen Magnetisierungswechsel nicht mehr als unsymmetrisch auftretende Verzerrungen in einem aus den Lesesignalen des Servokopfes abgeleiteten Positionssignal auswirken können. Unter dieser Voraussetzung soll weiterhin eine sehr einfach aufgebaute und selbst keine unsymmetrischen Fehler erzeugende Auswerteelektronik angegeben werden. Auf diese Weise soll damit ein Servosystem für einen Magnetplattenspeicher geschaffen werden, bei dem ein noch verbleibender Spurteilungsfehler auf den Anteil reduziert ist, der im wesentlichen auf den Einfluß des nicht wiederholbaren Schlages der Antriebsspindel für den Plattenstapel zurückzuführen ist.

Erfindungsgemäß wird diese Aufgabe gelöst durch die im Kennzeichen des Patentanspruches 1 beschriebenen Merkmale.

Ein wesentliches Merkmal im Aufbau einer erfindungsgemäß ausgebildeten Servozelle liegt in der Verwendung von radial durchgeschriebenen Separationsmagnetisierungswechseln, die die einzelnen Positionsdibits von einander trennen. Damit ist jedes Positionsdibit der gleichen Degradation durch die unmittelbar benachbarten Magnetisierungswechsel ausgesetzt. So ist eine Voraussetzung für eine hohe Spurteilungsgenauigkeit sowie eine gute Linearität des Positionssignales geschaffen. Darüber hinaus werden in einer Variante im Gegensatz zu herkömmlichen Servomustern anstatt von nur vier Positionsdibits nunmehr sechs Positionsdibits vorgesehen, um vier Spurtypen zu kennzeichnen. Damit lassen sich mehrere sinnvolle Lagevarianten jeweils signifikanter Paare von Positionsdibits darstellen, die in Gruppen zu je vier Varianten zusammengefaßt jeweils vier unterschiedliche Spurtypen definieren und die bezüglich der jeweiligen Spurmitte eine identische geometrische Konfiguration aufweisen. Dies ist die Voraussetzung dafür, daß sich aufgrund einer unvermeidbaren einseitigen Degradation noch auftretende absolute Spurablagefehler immer in der gleichen Richtung auswirken. Wegen dieser Richtungsabhängigkeit ist aber die resultierende Spurteilung fehlerfrei, d. h. bei der Positionierung der den Datenoberflächen des Magnetplattenspeichers zugeordneten Schreib/Leseköpfe sind keine Spurteilungsfehler erkennbar.

Weiterhin kommt dazu, daß die übereinstimmende Konfiguration aller Paare von signifikanten Positionsdibits bei der Demodulation in einer Auswerteelektronik immer zu gleichen Steigungen des abgeleiteten Positionssignales und damit zu konstanter Verstärkung im auszuwertenden Regelbereich führt. Aufgrund dieser Eigenschaft des Positionsregelsignales erhöht sich die Stabilität des Regelkreises des Spurfolgesystemes wesentlich. Das wiederum läßt auch kürzere Abstände von Magnetisierungswechselpaaren im Servomuster zu, ohne den Regelkreis instabil werden zu lassen. Kürzere Abstände im Servomuster sind aber wiederum Voraussetzung dafür, bei ausreichender Positioniersicherheit höhere Positioniergeschwindigkeiten zu erreichen.

In diesem Zusammenhang ist auch darauf hinzuweisen, daß dieser erfindungsgemäße Aufbau einer Servozelle trotz der Verwendung von mehr als den herkömmlichen vier Positionsdibits und trotz dazwischen liegender Separationsmagnetisierungswechsel immer noch sehr kompakt aufgebaut ist und damit eine entsprechend hohe Anzahl von Servozellen pro Servospur realisierbar ist. Dies erhöht ebenfalls die aus dem Servomuster sich ergebenden Möglichkeiten für höhere Positioniergeschwindigkeiten.

Mit einem derartigen Aufbau einer Servozelle ist außerdem eine Voraussetzung geschaffen, eine verbesserte Auswerteelektronik zur Demodulation der vom Servokopf abgegebenen Lesesignale zu schaffen. Bei einer erfindungsgemäß ausgebildeten Auswerteelektronik ist, wie in einem Unteranspruch beschrieben, neben einem Gleichrichter zum Gleichrichten des symmetrischen Lesesignales in einem Eingangsnetzwerk lediglich eine weitere, diesem Gleichrichter bezüglich der Eingangsseite parallel geschaltete Gleichrichteranordnung vorgesehen, die aus zwei über Steuereingänge selektiv aktivierbaren Gleichrichtern besteht, wobei ein Taktfenstergenerator vorgesehen ist, der in zeitlicher Abhängigkeit von einem aus einem Synchronisierungsdibit der Servozelle abgeleiteten Synchronisierungsimpuls je ein Paar von Fenstersignalen erzeugt, die jeweils dem Steuereingang des einen bzw. des anderen der gesteuerten Gleichrichter zugeführt sind und wobei eine einzige Subtrahierstufe vorgesehen ist, deren Eingänge jeweils mit einem Ausgang der gesteuerten Gleichrichter verbunden sind und deren Ausgang das Positionsfehlersignal abgibt.

Mit einem derartigen Aufbau der Auswerteelektronik zur Demodulation des Lesesignales des Servokopfes werden zwar nicht alle Toleranzen eliminiert, die bei herkömmlichen Auswerteelektroniken zu Spurteilungsfehlern führen, jedoch müssen sich zwangsläufig Toleranzfehler immer in der gleichen Richtung auswirken, so daß zwar, absolut betrachtet, immer noch ein Spurablagefehler auftreten kann, dieser jedoch in benachbarten Spuren nicht zu nach Betrag und Richtung unterschiedlichen Spurmittenverschiebungen führt. Absolut auftretende Spurmittenverschiebungen wirken sich daher auch hier wiederum nicht mehr auf den Lese- und Schreibbetrieb bei den Datenflächen des Magnetplattenspeichers aus.

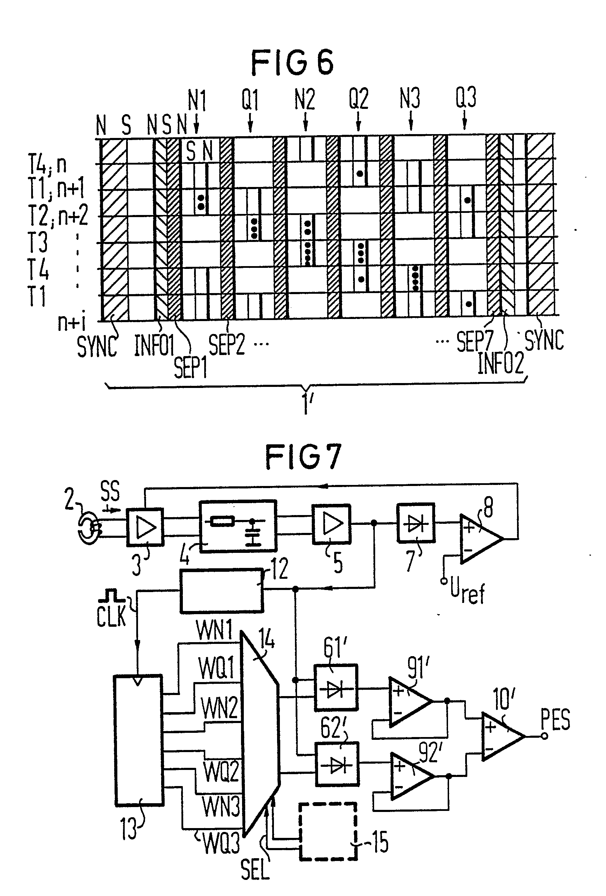

Andere Weiterbildungen der Erfindung ergeben sich aus den übrigen Unteransprüchen und sind im folgenden anhand der Beschreibung von Ausführungsbeispielen der Erfindung näher erläutert, die anhand der FIG 6 bis 10 der Zeichnung beschrieben werden, dabei zeigt

FIG 6 als einen Ausschnitt aus der Servooberfläche eine Servozelle über mehrere, in radialer Richtung aufeinanderfolgende Servospuren,

FIG 7 ein Blockschaltbild einer Auswerteelektronik für Lesesignale, die beim Lesen eines Servomusters nach FIG 6 erhalten werden zum Ableiten von Positionssignalen,

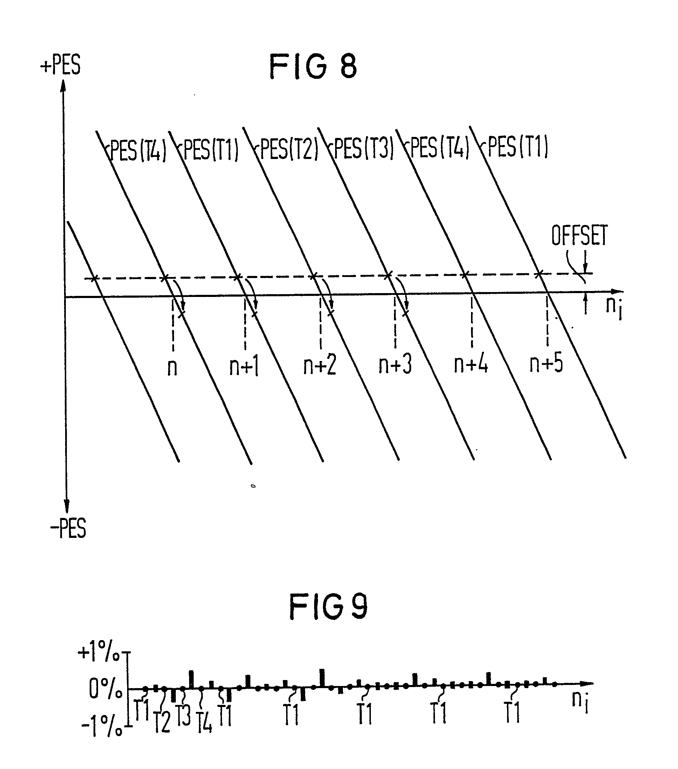

FIG 8 verschiedene, jeweils um 90° phasenverschobene Kurvenverläufe der Positionssignale, die sich beim Abtasten des Servomusters von FIG 6 in radialer Richtung bei unterschiedlichen Spurtypen ergeben,

FIG 9 eine Darstellung von Absolutwerten des relativen Spurteilungsfehlers, der bei Verwendung eines Servomusters nach FIG 6 und einer Auswerteelektronik nach FIG 7 auftritt und

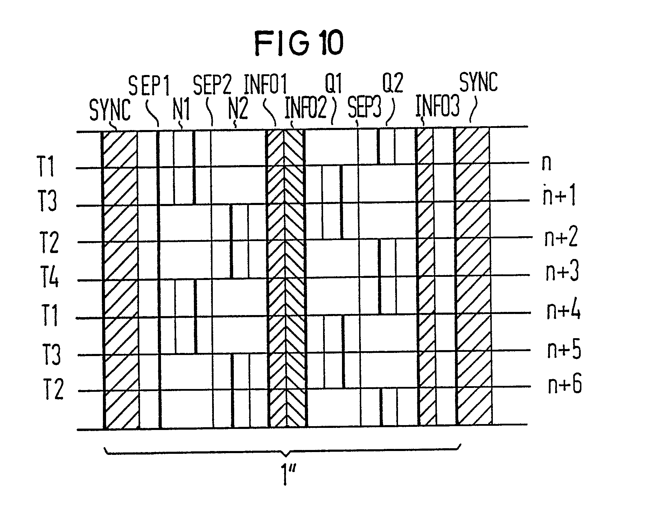

FIG 10 ein weiteres Ausführungsbeispiel für ein erfindungsgemäß ausgebildetes Servomuster.

Als Ausschnitt aus einer Servooberfläche ist in FIG 6 für mehrere aufeinanderfolgende Spuren n + i eine Servozelle 1' dargestellt. Die Servozelle beginnt, von links nach rechts betrachtet, mit einem radial durchgeschriebenen Synchronisierungsdibit SYNC. Beim Lesen der Servoinformation werden daraus Synchronisierungssignale zum Generieren des Schreib/Lesetaktes des Magnetplattenspeichers, aber auch von Zeitsteuersignalen, die bei der Demodulation der Lesesignale der Servoinformation verwendet werden. Im Abstand der Nord/Süd-Magnetisierungswechsel N, S dieses Synchronisierungsdibits folgt darauf ein erstes Informationsdibit INFO1, bei dem der Abstand der Magnetisierungswechsel gegenüber dem Synchronisierungsdibit SYNC halbiert ist. In diesem Ausführungsbeispiel schließt sich unmittelbar an dieses erste Informationsdibit ein erstes Separationsdibit SEP1 derart an, daß die Süd-Magnetisierungswechsel des ersten Informationsdibits INFO1 und des ersten Separationsdibits SEP1 zusammenfallen. Abgeschlossen wird die Servozelle auf der anderen Seite durch eine entsprechende Konfiguration eines letzten Separationsdibits SEP7 und eines zweiten Informationsdibits INFO2, auf die wiederum das Synchronisierungsdibit SYNC der nächsten, in Spurrichtung liegenden Servozelle folgt. Die beiden genannten Informationsdibits INFO1 und INFO2 beiderseits des Synchronisierungsdibits dienen zur Verschlüsselung von Indexinformation, d. h. Spuranfangs- und Spursektorinformation bzw. zur Definition von Guard-Bändern und sind deshalb nicht in voller Länge radial durchgeschrieben.

Daneben enthält die Servozelle 1' zwischen dem ersten und dem siebten Separationsdibit SEP1 bzw. SEP7 sechs in äquidistanten Abständen liegende Positionsdibits N1, Q1, N2, Q2, N3 und Q3, die jeweils durch eines von weiteren Separationsdibits SEP2 bis SEP6 voneinander getrennt sind. In Radialrichtung der Servooberfläche betrachtet, die in FIG 6 der Vertikalen entspricht, sind die Separationsdibits durchgeschrieben, die Positionsdibits dagegen überdecken zwei Spuren, reichen also beispielsweise von Spurmitte der Servospur n bis zur Spurmitte der Servospur n + 2 und haben einen ebenso großen radialen Abstand voneinander. In Spurrichtung betrachtet sind aufeinanderfolgende Positionsdibits jeweils um eine Spurteilung zueinander versetzt angeordnet, so daß sich eine regelmäßige geometrische Konfiguration ergibt, die treppenförmig verläuft.

Der Zweck dieser geometrischen Anordnung von Positionsdibits und dazwischen angeordneten Separationsdibits liegt darin, daß sich auf diese Art und Weise bei allen Positionsdibits die gleiche Degradation der Magnetisierungswechsel ergibt, die durch das benachbarte Separationsdibit bedingt ist. In gleicher Weise werden alle Positionsdibits beim Servoschreiben aufeinanderfolgender Spuren immer am unteren seitlichen Rand durch Überschreiben in aufeinanderfolgenden Spuren beeinflußt. Von unvermeidbaren Degradationen sind daher alle Positionsdibits in gleicher Weise betroffen.

Um nun die vier verschiedenen Spurtypen, mit T1 bis T4 bezeichnet, in radial aufeinanderfolgenden Servospuren unterscheiden zu können, werden jeweils Paare dafür signifikanter Positionsdibits ausgewählt. Um dies in FIG 6 zu verdeutlichen, sind einander zugehörige Paare von Positionsdibits jeweils durch eine entsprechende Anzahl von Punkten gekennzeichnet. D. h. der Spurtyp T1 - in FIG 6 der Spur n + 1 zugeordnet und durch eine Maximalamplitude beim ersten Positionsdibit N1 definiert - weist als signifikante Positionsdibits die Quadratur-Positionsdibits Q2 und Q3 auf. Beim Spurtyp T2 sind dies die beiden normalen Positionsdibits N1 und N2. Analoges gilt für die Spurtypen T3 bzw. T4.

Wie man sieht, liegen die jeweils signifikanten Positionsdibits bei jedem Spurtyp immer im gleichen Abstand und haben ebenso bezüglich der zugehörigen Spurmitte immer die gleiche geometrische Lage. Für die Demodulation der von der Servooberfläche gelesenen Signale bedeutet dies, daß die den signifikanten Positionsdibits entsprechenden Signalanteile immer in gleicher zeitlicher Folge und in gleicher Richtung auftreten. Wie noch zu zeigen sein wird, kann daraus immer nur eine gleichbleibende Verschiebung von tatsächlichen Spurmitten in derselben Richtung resultieren, so daß die relative Lage der Spuren exakt der gewünschten Spurteilung tn entspricht.

Auswerteelektroniken zum Decodieren der von dem Servokopf 2 gelieferten Lesesignale SS sind als solche allgemein bekannt, so daß hier auf eine detaillierte Beschreibung der Schaltungseinzelheiten verzichtet werden kann. In FIG 7 ist deshalb lediglich ein Blockschaltbild für eine besonders zweckmäßige Ausführungsform dargestellt. In der in FIG 2 identisch enthaltene Module sind hier mit den gleichen Bezugszeichen bezeichnet. Analoge Schaltkreise sind, um einen Vergleich zu ermöglichen, mit abgeleiteten, durch " ' " gekennzeichnete Bezugszeichen bezeichnet.

Schematisch ist der Servokopf 2 gezeigt, der die Servosignale SS einem Vorverstärker 3 mit automatischer Verstärkungsregelung, einem sogenannten AGC-Verstärker zuführt. Die so verstärkten Lesesignale werden über einen Tiefpaß 4 und einen Differenzspannungsverstärker 5, einem Gleichrichter 7 zugeführt, der seinerseits an einen weiteren Differenzspannungsverstärker 8 angeschlossen ist. Dort werden die gleichgerichteten Signale mit einer vorgegebenen Referenzspannung $U_{ref}$ verglichen. Damit gibt der Differenzspannungsverstärker 8 eine Regelspannung ab, die auf den Vorverstärker 3 zur Regelung der Verstärkung der Lesesignale SS zurückgeführt wird.

Das Ausgangssignal des Differenzspannungsverstärkers 5 ist damit ein amplitudengeregeltes, bipolares Analogsignal, das weiter ausgewertet wird. Zunächst ist ein Synchronisierungsdetektor 12 vorgesehen, der in üblicher Weise aus diesem Analogsignal das gelesene Synchronisationsdibit SYNC selektiert und abgeleitete Synchronisierungsimpulse liefert. Dieser Synchronisierungsdetektor kann dazu beispielsweise einen pulsgesteuerten Oszillator enthalten, der dann eine aus dem gelesenen Synchronisationsdibit SYNC abgeleitete Folge von Taktsignalen CLK abgibt. Dieses interne Taktsignal wird einem Fenstergenerator 13 zugeführt, der sechs Fenstersignale WN1, WQ1, WN2, WQ2, WN3 bzw. WQ3 abgibt. Diese Fenstersignale legen jeweils Erwartungszeiträume für die den Positionsdibits N1, Q1, N2, Q2, N3 bzw. Q3 entsprechende Servosignalanteile SS fest. Da die Phasenlage dieser Fenstersignale zueinander durch den Aufbau der Servozelle vorgegeben ist, kann dieser Fenstergenerator 13 beispielsweise in der Form eines durch die Taktsignale CLK gesteuerten Binärzählers aufgebaut sein. Die Fenstersignale werden einem Demultiplexer 14 zugeführt, der im Spurfolgebetrieb jeweils das für den betreffenden Spurtyp signifikante Paar von Fenstersignalen auswählt. Bei der nach FIG 6 gewählten Festlegung sind dies beispielsweise für den Spurtyp T1 die Fenstersignale WQ2 bzw. WQ3, die auf die beiden Ausgänge des Demultiplexers 14 durchgeschaltet werden.

Zum Durchschalten eines bestimmten Paares von Fenstersignalen muß der Demultiplexer durch entsprechende Auswahlsignale angesteuert werden. Diese Selektionsinformation muß der Auswerteelektronik beispielsweise von einer Gerätesteuerung 15 zugeführt werden, da die Auswahlelektronik selbst nicht in der Lage ist, festzustellen, welchen Spurtyp die zu verfolgende Servospur repräsentiert. Dies ist aber auch bei herkömmlichen Auswerteelektroniken nicht anders, so daß die Kriterien und die Mittel zum Generieren dieser Auswahlsignale SEL an sich bekannt sind. Eine nähere Beschreibung der Generierung dieser Auswahlsignale erübrigt sich daher. Dies gilt umsomehr als Details über den Ablauf eines Positioniervorganges bei der Spurensuche nicht Gegenstand der vorliegenden Erfindung sind.

Die beiden vom Demultiplexer 14 ausgewählten Fenstersignale werden jeweils dem Steuereingang eines von zwei gesteuerten Gleichrichtern 61' bzw. 62' zugeführt, die außerdem parallel mit dem Ausgang des Differenzspannungsverstärkers 5 verbunden sind. An die Ausgänge der gesteuerten Gleichrichter 61' bzw. 62' ist jeweils ein als rückgekoppelter Differenzspannungsverstärker ausgebildeter Spannungsfolger 91' bzw. 92' angeschlossen. Die Ausgänge dieser beiden Spannungsfolger sind mit den beiden zueinander inversen Eingängen eines Subtrahierverstärkers 10' verbunden. Dieser gibt schließlich das abgeleitete Positionssignal PES ab, das das Differenzsignal aus den über die gesteuerten Gleichrichter 61' bzw. 62' durchgeschalteten Signalanteile des gelesenen Servosignales SS darstellt.

Analog zu FIG 3 kann man wiederum Spannungsverläufe dieses Positionssignales schematisch darstellen, wie sie sich je nach der durch den Demultiplexer 14 bewirkten Selektion von signifikanten Paaren von Positionsdibits, beispielsweise N1 und N2 ergeben. In FIG 8 sind analog zu FIG 3 wiederum die vier verschiedenen, jeweils einem der Spurtypen T1 bis T4 zugeordneten Kurvenverläufe des Positionssignales PES dar gestellt. Um den jeweiligen Zusammenhang mit dem entsprechenden Spurtyp herzustellen, sind die zueinander um 90° phasenverschobenen Kurvenverläufe z. B. für den Spurtyp T1 mit PES (T1) bezeichnet. Wegen der Analogie zu FIG 3 erscheint eine weitere detaillierte Beschreibung dieser Kurvenverläufe an sich nicht erforderlich.

Was aber die Kurvenverläufe von FIG 8 im Vergleich zu denen von FIG 3 zeigen sollen, ist, daß die erstgenannten im Bereich des jeweiligen für das Spurfolgeregelsystem relevanten Kurvenast im Gegensatz zu den nicht invertierten Positionssignalen von FIG 3 immer die gleiche Steigung aufweisen. Dies ist auf das jeweilige, bezüglich der Spurmitte gleich konfigurierte Lagemuster der signifikanten Positionsdibits beispielsweise N1 und N2 beim Spurtyp T2 oder Q1 und Q2 beim Spurtyp T3 zurückzuführen.

Eine weitere wesentliche Eigenschaft des mit einer Auswerteelektronik gemäß FIG 7 generierten Positionssignales PES, im Unterschied zu herkömmlichen Positionssignalen PES-N bzw. PES-Q besteht darin, daß es unabhängig von dem jeweiligen Spurtyp immer nur einen bestimmten, gleichbleibenden Offsetfehler aufweisen kann. Denn die vorgeschlagene Auswerteelektronik weist keine mehrfach vorgesehenen Schaltnetzteile auf, die mit unterschiedlichen Toleranzen behaftet sein können, so daß damit eine der wesentlichen Ursachen für undefinierte Offsetfehler eliminiert ist.

Anhand der Darstellung von FIG 3 und den dazu gegebenen Erläuterungen läßt sich für den Fall der Auswerteelektronik gemäß FIG 7 ohne weiteres anhand von FIG 8 nachvollziehen, daß jeder Offsetfehler unabhängig von Richtung und Betrag zwar zu einem relativen Spurabstandsfehler führt, der jedoch unkritisch ist, da er sich nicht als Spurteilungsfehler auswirkt. Unvermeidbare Bauelementetoleranzen können sich daher nicht mehr als Spurteilungsfehler auswirken.

In FIG 9 sind Meßwerte für die Abweichung von der Nennspurteilung dargestellt, die sich bei der Analyse eines Testmoduls mit dem beschriebenen Servomuster bei einer Auswertung der gelesenen Servosignale durch eine gemäß FIG 7 aufgebaute Auswerteelektronik ergeben haben. Die aus dieser Darstellung erkennbare, unregelmäßig auftretende Ablage von der Spurmitte ist vor allem auf den Einfluß des in der Servoinformation festgeschriebenen, nicht wiederholbaren Spindelschlages zurückzuführen. Wie einleitend erläutert wurde, ist bei einer Spurdichte von 1200 TPI und einem noch zulässig erachteten nicht wiederholbaren Spindelschlag bis zu ± 0,15 µm ein relativer Spurteilungsfehler von bis zu ± 0,7 % bedingt. Setzt man die Nennrasenbreite mit 20 % der Nennspurteilung an, so ergibt der gemessene und in FIG 9 dargestellte Spurteilungsfehler von maximal 0,5 % eine Verringerung der Rasenbreite um 2,4 %. Bezogen auf den genannten, maximal zulässigen nicht wiederholbaren Spindelschlag errechnet sich eine Verringerung der Rasenbreite um 3,5 %. Diesen Wert muß man mit dem Wert für den aufsummierten Spurteilungsfehler bei herkömmlichen Servomustern und herkömmlichen Auswerteelektroniken vergleichen, der einleitend für eine Spurdichte von 1200 TPI mit 50 % genannt wurde. Betrachtet man eine Verringerung der Rasenbreite von beispielsweise 5 % als noch zulässig, so ergibt eine Hochrechnung, daß bei einer gleichen Spindelqualität und unter den in diesem Ausführungsbeispiel beschriebenen Voraussetzungen theoretisch allein mit diesen Maßnahmen eine Spurdichte von 1700 TPI erreichbar ist.

Mit dem beschriebenen Ausführungsbeispiel wurde nachgewiesen, daß mit einem Servomuster und einer Auswerteelektronik gemäß der Erfindung hohe Spurdichten mit großer Spurteilungsgenauigkeit verwirklicht werden können, wobei ein sich auf den Schreib/Lesebetrieb auswirkender Spurteilungsfehler im wesentlichen nur durch die Laufeigenschaften der Spindel bestimmt ist. Im Rahmen dieser Erfindung sind über das beschriebene Ausführungsbeispiel hinausgehend mannigfache Abwandlungen denkbar. Bei dem in FIG 6 dargestellen Servomuster ist es z. B. nicht unbedingt erforderlich, die vier verschiedenen Spurtypen durch die beschriebenen Paarungen von Positionsdibits zu definieren. Prinzipiell könnte beispielsweise der Spurtyp T1 auch mit den Quadraturdibits Q1 und Q2, der Spurtyp T2 mit den normalen Positionsdibits N2 und N3, der Spurtyp T3 mit den Quadraturdibits Q2 und Q3 sowie der Spurtyp T4 mit den normalen Positionsdibits N1 und N2 dargestellt werden. Wichtig ist für die jeweilige Festlegung lediglich, daß bei allen Spurtypen ein Paar von Positionsdibits ausgewählt wird, die, geometrisch betrachtet, gleichen Abstand in Spurrichtung und gleiche Anordnung bezüglich der jeweiligen Spurmitte aufweisen, so daß sich für alle Spurtypen eine gleiche geometrische Konfiguration ergibt. Schließlich könnten bei sehr hohen Spurdichten auch Schichtinhomogenitäten des Speichermediums bereits einen wesentlicheren Einfluß ausüben, da dann der Servokopf bereits sehr schmal wird. Diesem Einfluß könnte dadurch begegnet werden, daß die Positionsdibits des beschriebenen Servomusters im Gegensatz zu der Darstellung von FIG 6 über mehr als zwei, beispielsweise vier Spurteilungen bei gleichzeitiger Vergrößerung des radialen Abstandes voneinander um den selben Betrag erstreckt werden.

Weiterhin ist es nicht unbedingt notwendig, sechs Positionsbits zu verwenden. Auch mit herkömmlichen vier Positionsbits lassen sich symmetrische Servomuster aufbauen, solange nur die Positionsdibits untereinander separiert werden. Für die Separierung genügt an sich auch bereits ein einfacher Magnetisierungswechsel anstatt eines Separationsdibits. Dies illustriert das in FIG 10 dargestellte weitere Ausführungsbeispiel einer Servozelle, die aus zwei Subzellen, einer N- bzw. Q-Subzelle besteht. Hier bilden die Separationsmagnetisierungswechsel in der N- und Q-Subzelle jeweils die Symmetrielinie für die Positionsdibits N1, N2 bzw. Q1, Q2. Informationsdibits INFO1, INFO2 und INFO3 sind derart angeordnet, daß die Symmetrie innerhalb der Subzellen erhalten bleibt. Um den bereits beschriebenen zweiten Degradationseffekt durch das Überschreiben zu eliminieren, wird bei dieser Ausführungsform für den Spurtyp T3 aus den Lesesignalen der Positionsdibits N1 und N2 die Differenz N1-N2, dagegen für den Spurtyp T4 die Differenz N2-N1 gebildet. Analog wird in der Q-Subzelle verfahren.

## Ansprüche

1. Magnetplattenspeicher mit separater Servo-oberfläche mit in Servospuren ($n_i$) in Form von in Umfangs- und Radialrichtung insgesamt regelmäßig angeordneten Magnetisierungswechseln (N, S) gespeicherter Positionssteuerinformation, aufgebaut aus sich in Umfangsrichtung wiederholenden, je ein Synchronisierungsdibit (SYNC), Informationsdibit (INFO) und mehrere Positionsdibits (N1, N2, Q1, Q2) enthaltenden Servozellen (1), die sich in radialer Richtung durch ein je einen Spurtyp (T1, T2, T3 bzw. T4) festlegendes geometrisches Muster der Positionsdibits voneinander unterscheiden, mit ei-nem dieser Servooberfläche zugeordneten Servo-kopf (2) und einer an diesen angeschlossenen Auswerteelektronik zum Aufbereiten, Gleichrichten und selektiven Vergleichen von Lesesignalen (SS) des für den jeweiligen Spurtyp charakteristischen Paares von Positionsdibits (z. B. N1, N2) zum Erzeugen eines Positionsfehlersignales (PES), **dadurch gekennzeichnet,** daß die Positionsdibits in den Servozellen (1') durch Separationsmagnetisierungswechsel (SEP) voneinander getrennt sind, die ihrerseits bezüglich der ihnen benachbarten Positionsdibits symmetrisch angeordnet sind.

2. Magnetplattenspeicher mit separater Servooberfläche nach Anspruch 1, **dadurch gekenn-zeichnet,** daß die Separationsmagnetisierungs-wechsel (SEP1 bis SEP7) ebenso wie die sie einschließenden Positionsdibits aus einem Paar von Magnetisierungswechseln (N, S) entgegengesetzter Magnetisierungsrichtung bestehen.

3. Magnetplattenspeicher mit separater Servooberfläche nach Anspruch 2, **dadurch gekennzeichnet,** daß in jeder Servozelle (1') auf ein Synchronisierungsdibit (SYNC) mit einer gegenüber den Positionsdibits (N1 bis N3, Q1 bis Q3) doppelten physikalischen Breite ein erstes Informationsdibit (INFO) mit einem unmittelbar daran gesetz ten Separationsdibit (SEP1), jeweils mit der Breite eines Positionsdibits, folgt, daß daran anschließend weitere Separationsdibits (SEP2 bis SEP7) sowie die Positionsdibits (N1, Q1, N2, Q2, N3, Q3) bei jeweils gleichem Abstand und gleicher Breite alternativ angeordnet sind und daß an das letzte Separationsdibit (SEP7) unmittelbar ein weiteres Informationsdibit (INFO2) angesetzt ist, auf das das Synchronisierungsdibit der nächsten Servozelle folgt.

4. Magnetplattenspeicher mit separater Servooberfläche nach einem der Ansprüche 1 bis 3 bei einer regelmäßigen geometrischen Anordnung der Positionsdibits mit je einer radialen Länge, die einem geradzahligen Mehrfachen der Spurteilung (tw) entspricht und mit einer Überlappung von mindestens einer Spurweite bei jeweils in Spurrichtung aufeinanderfolgenden Positionsdibits, **dadurch gekennzeichnet,** daß in einer Servozelle (1') sechs Positionsdibits (N1 bis N3, Q1 bis Q3) vorgesehen sind und zum selektiven Vergleich der Lesesignale (SS) des Servokopfes (2) bei in radialer Richtung aufeinanderfolgenden Servospuren ($n_i$) mit unter-schiedlichen Spurtypen (T1 bis T4) jeweils Paare von Positionsdibits (z. B. N1, N2 oder Q1, Q2) ausgewählt sind, die bei identischer Phasendifferenz gleiche Richtungssymmetrie bezüglich einer Referenzlinie der betreffenden Spur aufweisen.

5. Magnetplattenspeicher mit separater Servooberfläche nach Anspruch 4, **dadurch gekennzeichnet,** daß die radiale Länge der Positionsdibits (N1 bis N3, Q1 bis Q3) der doppelten Spurteilung (tw) entspricht und in Richtung der Spur ($n_i$) aufein-anderfolgende Positionsdibits (z. B. N1, Q1) jeweils in gleicher Richtung radial zueinander verschoben um eine Spurteilung überlappt angeordnet sind.

6. Magnetplattenspeicher mit separater Servooberfläche nach einem der Ansprüche 1 bis 4 mit einer Auswerteelektronik, die ein Eingangsnetzwerk (3, 4, 5, 7, 8) mit automatischer Verstärkungsregelung der vom Servokopf (2) abgegebenen analogen Lesesignale (SS) aufweist , **dadurch gekennzeichnet,** daß neben einem Gleichrichter (7) zum Gleichrichten des symmetrischen Lesesignales im Eingangsnetzwerk lediglich eine weitere, diesem Gleichrichter bezüglich der Eingangsseite parallel geschaltete Gleichrichteranordnung vorgesehen ist, die aus zwei, über Steuereingänge selektiv anzusteuernden Gleichrichtern (61', 62') besteht, daß ein Fenstergenerator (13) vorgesehen ist, der in Abhängigkeit von aus dem Lesesignal des Syn-chronisierungsdibits (SYNC) abgeleiteten Taktim-pulsen (CLK) Fenstersignale (WN1, WQ1, WN2, WQ2, WN3, WQ3) erzeugt, die jeweils nach dem jeweiligen Spurtyp (T1, T2, T3 bzw. T4) paarweise ausgewählt, den Steuereingängen des einen bzw. des anderen der gesteuerten Gleichrichter (61' bzw. 62') zuführbar sind und daß eine Subtrahierstufe (10') vorgesehen ist, deren Eingänge jeweils mit einem Ausgang der gesteuerten Gleichrichter gekoppelt sind und deren Ausgang das Positionsfehlersignal (PES) abgibt.

7. Magnetplattenspeicher mit separater Servooberfläche nach Anspruch 6, **dadurch gekennzeichnet,** daß die Subtrahierstufe (10') als Differenzspannungsverstärker ausgebildet ist.

8. Magnetplattenspeicher mit separater Servooberfläche nach Anspruch 5 oder 6, **dadurch gekennzeichnet,** daß zwischen dem Ausgang der gesteuerten Gleichrichter (61′, 62′) und dem jeweils zugeordneten Eingang der Subtrahierstufe (10′) je eine Spannungsfolgerschaltung (91′ bzw. 92′) angeordnet ist.

9. Magnetplattenspeicher mit separater Servooberfläche nach Anspruch 8, **dadurch gekennzeichnet,** daß die Spannungsfolgerschaltung (91′ bzw. 92′) ebenfalls als Differenzspannungsverstärker ausgebildet ist, dessen normaler Eingang an den Ausgang des zugeordneten gesteuerten Gleichrichters (61′ bzw. 62′) angeschlossen und dessen Ausgang auf den invertierenden Eingang rückgekoppelt und außerdem mit einem der beiden Eingänge der Subtrahierstufe (10′) verbunden ist.

10. Magnetplattenspeicher mit separater Servooberfläche nach einem der Ansprüche 1 oder 2, **dadurch gekennzeichnet,** daß jede zwischen aufeinanderfolgenden Synchronisierungsdibits (SYNC) angeordnete Servozelle (1″) aus zwei jeweils symmetrisch aufgebauten Subzellen besteht, in denen beiderseits eines Separationsmagnetisierungswechsels (SEP2 bzw. SEP3), der in der Symmetrielinie angeordnet ist, jeweils ein Positionsdibit (N1, N2 bzw. Q1, Q2) vorgesehen ist, wobei die zueinander gehörenden Paare von Positionsdibits in Radialrichtung zueinander jeweils ohne Überlappung versetzt angeordnet sind.

11. Magnetplattenspeicher mit separater Servooberfläche nach Anspruch 10, **dadurch gekennzeichnet,** daß in der einen Subzelle neben dem in der Symmetrielinie liegenden Separationsmagnetisierungswechsel (SEP2) zwischen dem Synchronisierungsdibit (SYNC) und dem nachfolgenden Positionsdibit (N1) ein weiterer Separationsmagnetisierungswechsel (SEP1) und im Anschluß an das zweite Positionsdibit (N2) ein erstes Informationsdibit (INFO1) vorgesehen sind und daß in der zweiten Subzelle unmittelbar an dieses erste Informationsdibit angesetzt ein zweites Informationsdibit (INFO2) folgt und symmetrisch dazu ein drittes Informationsdibit (INFO3) dem nachfolgenden Synchronisierungsdibit benachbart vorgesehen ist.

# FIG 1

# FIG 2

# FIG 3

# FIG 4

FIG 5

EP 0 332 056 A1

## FIG 6

## FIG 7

EP 0 332 056 A1

FIG 8

FIG 9

# FIG 10

# EUROPÄISCHER RECHERCHENBERICHT

**Europäisches Patentamt**

Nummer der Anmeldung

EP 89 10 3688

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0240745 (MEMOREX CORPORATION) * Seite 11, Zeile 16 - Seite 12, Zeile 29; Figuren 3-5 * | 1-3, 10 | G11B5/596 |
| A | NEUES AUS DER TECHNIK no. 3, 15 Juni 1979, WÜRZBURG, DE Seite 4 "SERVOSPURKODIERUNGSMUSTER" * das ganze Dokument * | 1, 4, 5 | |
| A | WO-A-8301859 (DMA SYSTEMS) * Seite 10 - 11; Figur 5 * | 1, 4, 5 | |
| A | ELECTRONICS INTERNATIONAL vol. 56, no. 5, 10 März 1983, NEW YORK, US Seite 139 - 142; L.SARISKY: "REFINED CLOSED-LOOP SERVO ENHANCES LOW-COST DISK DRIVE 'S ACCURACY" * Seite 140, linke Spalte, Zeile 16 - Seite 141, rechte Spalte, Zeile 8; Figuren 2-3 * | 1-3, 10 | |
| A | PATENT ABSTRACTS OF JAPAN vol. 4, no. 15 (E-170) 05 Februar 1980, & JP-A-54 156508 (HITACHI SEISAKUSHO K.K.) * siehe das ganze Dokument * | 1, 6-9 | **RECHERCHIERTE SACHGEBIETE (Int. Cl.4)** G11B |
| A | PATENT ABSTRACTS OF JAPAN vol. 10, no. 225 (P-484) 2281 06 August 1986, & JP-A-61 59671 (FUJITSU LTD.) * siehe das ganze Dokument * | | |
| A | US-A-4616275 (B.D.PEETERS) | | |
| A | US-A-4682253 (J.B.LESLIE) | | |
| A | PATENT ABSTRACTS OF JAPAN vol. 6, no. 75 (P-114) 953 12 Mai 1982, & JP-A-57 12456 (MITSUBISHI DENKI K.K.) * siehe das ganze Dokument * | | |

Der vorliegende Recherchenbericht wurde für alle Patentansprüche erstellt

| Recherchenort | Abschlußdatum der Recherche | Prüfer |
|---|---|---|
| DEN HAAG | 02 JUNI 1989 | CARTRYSSE A.A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)